## Europäisches Patentamt
## European Patent Office
## Office européen des brevets

(11) Veröffentlichungsnummer: **0 304 774 B1**

(12) **EUROPÄISCHE PATENTSCHRIFT**

(45) Veröffentlichungstag der Patentschrift: **29.06.94**

(21) Anmeldenummer: **88113286.4**

(22) Anmeldetag: **16.08.88**

(51) Int. Cl.5: **G01F 1/58**

(54) Verfahren zur Erzeugung eines Signals, das der Stromstärke eines fliessenden, elektrisch leitenden Mediums entspricht.

(30) Priorität: **25.08.87 DE 3728342**

(43) Veröffentlichungstag der Anmeldung:
**01.03.89 Patentblatt 89/09**

(45) Bekanntmachung des Hinweises auf die Patenterteilung:
**29.06.94 Patentblatt 94/26**

(84) Benannte Vertragsstaaten:
**CH DE FR GB LI NL**

(56) Entgegenhaltungen:
**CH-A- 634 408**
**DE-A- 2 557 328**
**DE-A- 2 637 307**
**FR-A- 2 589 571**

(73) Patentinhaber: **Fischer & Porter GmbH**
**Postfach 1843**
**Dransfelder Strasse 2**
**D-37079 Göttingen(DE)**

(72) Erfinder: **Nissen, Peter, Dr.**
**Flachsrotte 9**
**D-3405 Rosdorf 1(DE)**
Erfinder: **Schwiderski, Hans-Werner**
**Rodeweg 17**
**D-3400 Göttingen(DE)**
Erfinder: **Geisler, Gottfried**
**Olenhuser Weg 6**
**D-3400 Göttingen(DE)**

(74) Vertreter: **Fincke, Karl Theodor, Dipl.-Phys. Dr. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**D-81635 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren nach dem Oberbegriff des Anspruchs 1 bzw. des Anspruchs 2.

Verfahren dieser Art sind nach der FR-A1-2 589 571 bekannt.

Bei diesen Verfahren sind keine Mittel vorgesehen, die auf Änderungen pro Zeiteinheit des vom Gleichfeld herrührenden Anteils ansprechen.

Diese Verfahren haben folgende Nachteile:

a) Bei stark schwankendem Strom folgt das Signal Änderungen der Stromstärke des fließenden Mediums nur träge.

b) Das Signal ist sehr empfindlich gegenüber elektrischer Leitfähigkeits-Inhomogenität im Strom des fließenden Mediums. Dem Signal kann dadurch ein Störanteil überlagert werden, der das Zehnfache des Signals übersteigt, so daß das Signal als Ist-Signal in schnellen Regelprozessen nicht verwendbar ist.

c) das Signal ist empfindlich gegenüber niederfrequenten äußeren Störungen.

d) Das System ist, bedingt durch die Wirbelstromanteile im Magnetkreis, temperaturempfindlich.

Aufgabe der Erfindung ist es, Verfahren genannter Art anzugeben, bei denen das Signal Änderungen der Stromstärke des fließenden Mediums rasch folgt, unempfindlich gegenüber Leitfähigkeitsinhomogenitäten im fließenden Medium ist, unempfindlich gegenüber niederfrequenten äußeren Störungen ist und temperaturunempfindlich ist.

Lösungen dieser Aufgabe sind in den Kennzeichen der Ansprüche 1 und 2 angegeben. Diese Lösungen können aber auch nach Anspruch 3 vereinigt werden.

Die Verfahren führen zu folgenden Vorteilen:

a) Ist die Stromstärke des fließenden Mediums Null, so ist auch das Signal stabil Null.

b) Bei gleichmäßigem, homogenen Strom des fließenden Mediums entspricht das Signal mit hoher Genauigkeit der Stromstärke des fließenden Mediums.

c) Das Systemverhalten ist weigtehend temperaturunempfindlich.

d) Das Magnetfeld ist mit verhältnismäßig geringer Leistung zu erzeugen.

e) Das Signal folgt sehr rasch Änderungen der Stromstärke des fließenden Mediums und ist daher gut als Ist-Signal in schnellen Regelprozessen verwendbar.

f) Das Signal ist unempfindlich gegenüber elektrischen Leitfähigkeitsinhomogenitäten im Strom des fließenden Mediums.

Das Verfahren wird bevorzugt in folgender Weise gesteuert:

Bei einem einer Stromstärke Null oder nahezu Null des fließenden Mediums entsprechenden Signal Null oder nahezu Null wird das Gleichfeld zur Erzeugung des Signals verwendet.

Bei einem einer zeitlich stark schwankenden Stromstärke des fließenden Mediums entsprechenden zeitlich stark schwankenden Signal wird das Wechselfeld zur Erzeugung des Signals verwendet.

Bei einem einer konstanten oder zeitlich schwach schwankenden Stromstärke des fließenden Mediums entsprechenden zeitlich schwach schwankenden Signal ohne überlagerte Störspitzen wird das Gleichfeld zur Erzeugung des Signals verwendet.

Bei einem einer konstanten oder zeitlich schwach schwankenden Stromstärke des fließenden Mediums entsprechenden zeitlich schwach schwankenden Signal mit überlagerten Störspitzen wird das Wechselfeld zur Erzeugung des Signals verwendet.

Bei sehr starken Störungen des Signals wird unabhängig von zeitlich starken oder schwachen Schwankungen des Signals das Wechselfeld zur Erzeugung des Signals verwendet.

Das Gleichfeld kann gemäß Anspruch 4 bzw. 5 monopolar oder bipolar sein.

Bei monopolarem Gleichfeld erhält man den Vorteil, daß die Schaltung mit einfachsten Schaltmitteln ausgeführt werden kann.

Bei bipolarem Gleichfeld erhält man den Vorteil, daß die installierte Leistung zur Erzeugung der gleichen Signalamplitude wie bei monopolarem Feld erheblich geringer sein kann (kleineres Netzteil).

Um den Nullpunkt des von dem Wechselfeld herrührenden Anteils zu korrigieren, wird bevorzugt gemäß Anspruch 6 vorgegangen.

Um bei Ableitung des Signals aus den vom dem Gleichfeld herrührenden Anteilen möglichst unabhängig von Einschwingvorgängen zu sein, wird bevorzugt gemäß Anspruch 7 vorgegangen.

Bei dem Verfahren nach Anspruch 1 erhält man bei Ableitung des Signals aus den dem Wechselfeld entsprechenden Anteilen ein besonders störungsfreies Signal, wenn man gemäß Anspruch 8 vorgeht.

Die Steuerung wird dabei besonders einfach, wenn man gemäß Anspruch 9 vorgeht.

Die dem Wechselfeld entsprechenden Anteile stören die Ableitung der dem Gleichfeld entsprechenden Anteile besonders wenig, wenn man gemäß Anspruch 10 vorgeht.

Die Erfindung wird im folgenden an Ausführungsbeispielen unter Hinweis auf die beigefügten Zeichnungen beschrieben.

Figur 1    zeigt eine Schaltungsanordnung zur Durchführung der beiden Verfahren;

Figur 2    zeigt Taktsignal-, Magnetfeld- und Spannungsverläufe in der Schaltungsanordnung nach Figur 1 bei Durchführung des Verfahrens nach Anspruch 1;

Figur 3 zeigt Taktsignal-, Magnetfeld- und Spannungsverläufe in der Schaltungsanordnung nach Figur 1 bei Durchführung des Verfahrens nach Anspruch 2.

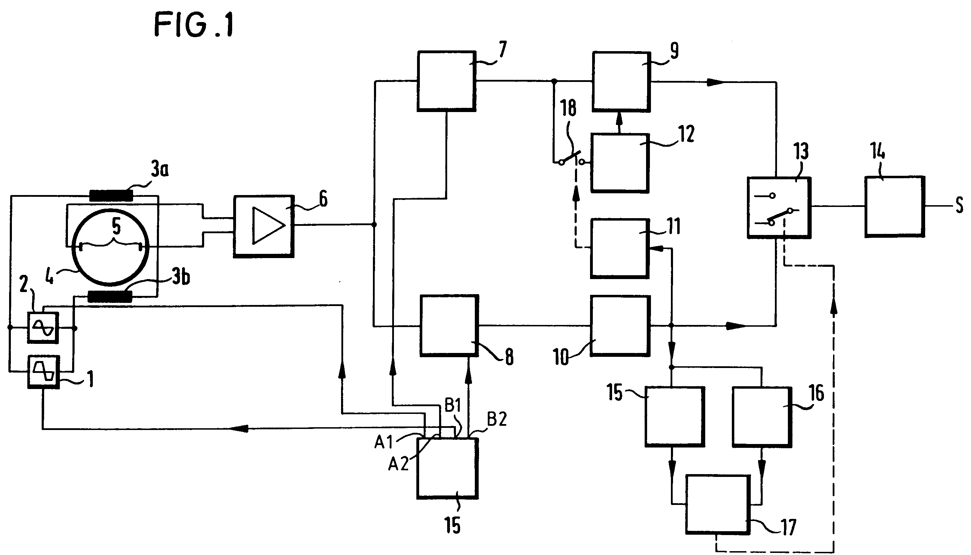

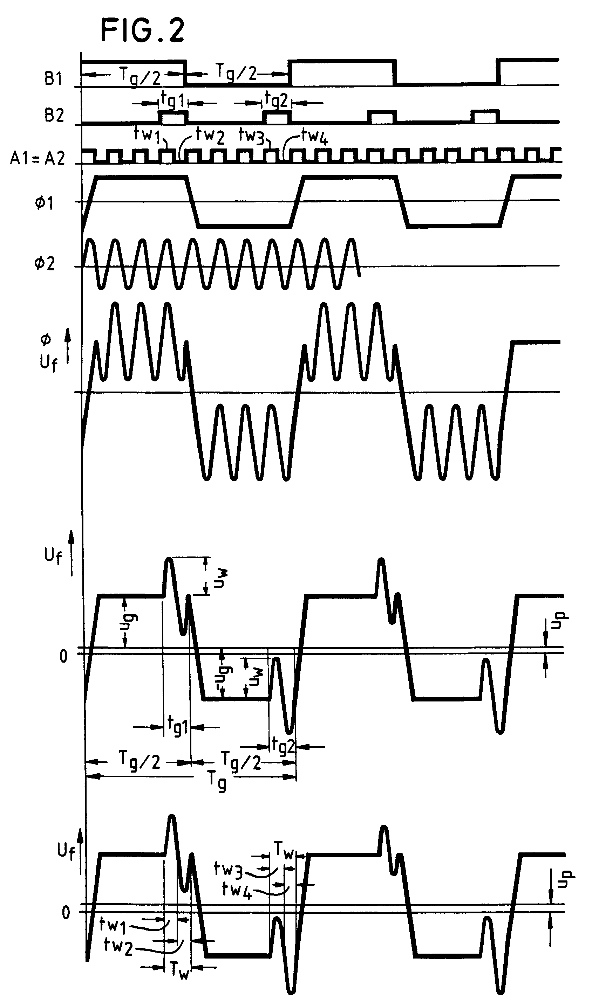

In Figur 1 ist schematisch ein Rohr 4 dargestellt, durch das ein elektrisch leitendes Medium fließt. In das Rohr 4 ragen von einander gegenüberliegenden Seiten Elektroden 5, die zu je einem Eingang eines Eingangsverstärkers 6 führen. Die Elektroden 5 erfassen Potentiale in dem fließenden Medium, die voneinander verschieden sind, wenn das Medium von einem durch Spulen 3a, 3b erzeugten Magnetfeld durchsetzt wird. Der Eingangsverstärker 6 gibt dann eine Spannung

$$U_f = U_p + u_g + u_w$$

ab, in der

$U_p$ eine Polarisationsspannung an den Elektroden 5,

$u_g$ einen Spannungsanteil, der von einem magnetischen Gleichfeld herrührt, und

$u_w$ einen Spannungsanteil, der von einem magnetischen Wechselfeld herrührt,

bedeutet.

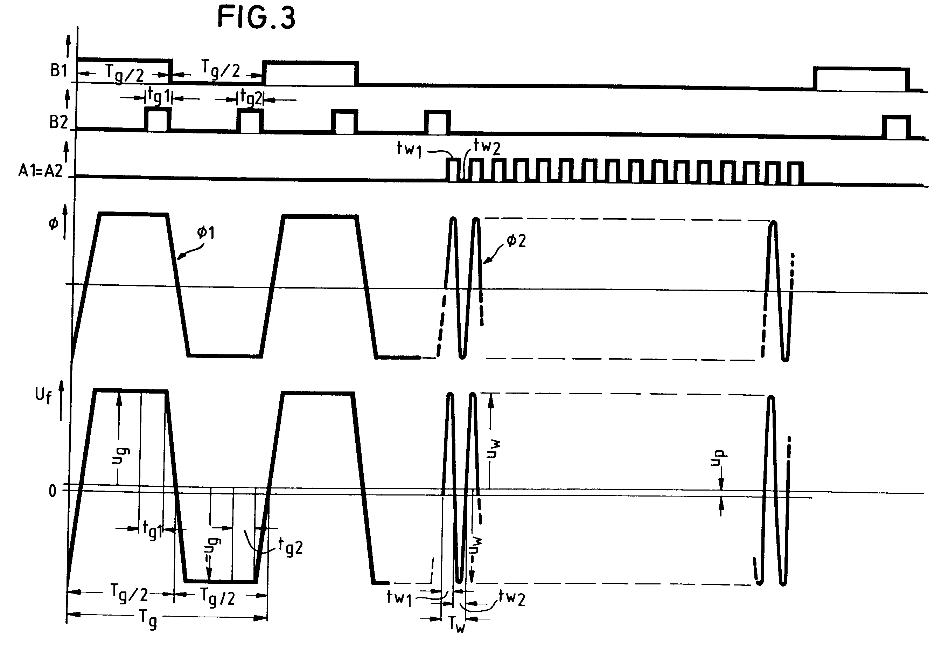

Zur Erzeugung des magnetischen Gleichfelds ist ein Gleichstromgenerator 1 und zur Erzeugung eines magnetischen Wechselfelds ein Generator 2 vorgesehen. Beide Generatoren 1, 2 liegen parallel zueinander mit den Spulen 3a und 3b in einem Stromkreis. Die Steuerung der Generatoren erfolgt durch einen Taktgeber 15, in dem aus Figur 2 bzw. 3 für die beiden Verfahren ersichtlichen Takt A1 bzw. B1. Die Spannung $U_f$ gelangt an die Eingänge von zwei Synchrongleichrichtern 7 und 8. Der Synchrongleichrichter 7 dient zur Gleichrichtung des dem Wechselfeld entsprechenden Spannungsanteils $u_w$. Synchrongleichrichter 8 dient zur Gleichrichtung des dem Gleichfeld entsprechenden Anteils $U_g$. Auch diese Gleichrichter 7, 8 werden von dem Taktgeber 15 gesteuert, und zwar in dem aus Figur 2 bzw. 3 ersichtlichen Takt A2 bzw. B2.

Der Synchrongleichrichter 7 gibt die von ihm gleichgerichteten Spannungsanteile an eine Auswerteschaltung 9 für das Wechselfeld. Der Synchrongleichrichter 8 gibt die von ihm gleichgerichteten Spannungsanteile an eine Auswerteschaltung 10 für das Gleichfeld.

Bei dem Verfahren nach Anspruch 1 erzeugen die Generatoren 1 und 2 ein bipolares Gleichfeld $\phi 1$ und ein Wechselfeld $\phi 2$. Diese Felder werden zu einem Feld $\phi$ überlagert. Die Spannung $U_f$ hat im wesentlichen den gleichen Verlauf wie das Feld $\phi$. Die Auswertung des dem Gleichfeld entsprechenden Anteils der Spannung erfolgt in den Abschnitten $t_{g1}$ und $t_{g2}$. Diese Abschnitte liegen an den Enden der Halbperioden $T_{g/2}$ des Gleichfelds.

In der Auswerteschaltung 10 werden die Spannungen in jeweils zwei aufeinanderfolgenden Abschnitten $t_{g1}$ und $t_{g2}$ vorzeichenrichtig voneinander subtrahiert. Man erhält

$$(U_p + u_g)_{tg1} - (U_p - u_g)_{tg2} = 2u_g$$

In der Auswerteschaltung 9 werden die von dem Wechselfeld herrührenden Anteile vorzeichenrichtig addiert. Man erhält für die erste Halbperiode $T_{g/2}$

$$(U_p + u_g + u_w)_{tw1} - (U_p + u_g - u_w)_{tw2} = 2u_w$$

und für die zweite Halbperiode $T_{g/2}$

$$(U_p - u_g + u_w)_{tw3} - (U_p - u_g - u_w)_{tw4} = 2u_w$$

Entweder die Spannungsanteile $2u_w$ oder die Spannungsanteile $2u_g$ gelangen über einen Umschalter 13 zu einem Ausgangsverstärker 14, der das gewünschte Signal S abgibt. Die Betätigung des Umschalters 13 erfolgt in Abhängigkeit vom Verlauf des Spannungsanteils $2u_g$ in der eingangs beschriebenen Weise. Hierzu ist ein Detektor 16 vorgesehen, der auf Änderungen von $2u_g$ pro Zeiteinheit anspricht, und, wenn diese Änderungen pro Zeiteinheit ein vorgegebenes Maß überschreiten, über ein ODER-Glied 17 den Umschalter 13 betätigt. Außerdem ist hierzu ein Detektor 15 vorgesehen, der dann, wenn die Spannungsanteile $2u_g$ - etwa bedingt durch Störungen - eine vorgegebene Höhe überschreiten, über das ODER-Glied 17 den Umschalter 13 betätigt.

Ist der Spannungsanteil $2u_g$ gleich Null, so wird dies von einem Detektor 11 erfaßt, der daraufhin einen Schalter 18 vor einem Subtraktionsglied 12 schließt, das an den Eingang der Auswerteschaltung 9 angeschlossen ist und ausgangsseitig den Nullpunkt der Auswerteschaltung 9 korrigiert.

Bei Ausführung des Verfahrens nach Figur 3 erfolgt eine Auswertung der dem Gleichfeld entsprechenden Anteile entsprechend dem Verfahren nach Anspruch 1 wie unmittelbar aus Figur 3 ersichtlich.

Die Auswertung des dem Wechselfeld entsprechenden Anteils erfolgt vereinfacht gemäß

$$(U_p + u_w)_{tw1} - (U_p - u_w)_{tw2} = 2u_w$$

Der Umschalter 13 wird ebenso betätigt wie bei dem Verfahren nach Anspruch 1.

**Patentansprüche**

1. Verfahren zur Erzeugung eines Signals (S), das der Stromstärke eines fließenden, elektrisch leitenden Mediums entspricht, mittels eines das Medium durchsetzenden Magnetfelds ($\phi$), Erfassung von Potentialen in dem Medium mittels zwei Elektroden (5) an zwei Stellen, zwischen denen infolge des Fließens des Mediums eine Potentialdifferenz besteht, und Ableitung des Signals (S) aus einer Spannung ($U_f$ = $U_p$ + $u_w$ + $u_g$), die dieser Potentialdifferenz entspricht, bei dem das Magnetfeld ($\phi$) ein sich mit verhältnismäßig langer Periode ($T_g$) periodisch änderndes Gleichfeld ($\phi_1$) ist, dem ein Wechselfeld ($\phi_2$) verhältnismäßig kurzer Periode ($T_w$) überlagert ist, und bei dem aus der Spannung ($U_f$ = $U_p$ + $u_w$ + $u_g$), die von dem Gleichfeld ($\phi_1$) und die von dem Wechselfeld ($\phi_2$) herrührenden Anteile ($u_g$ bzw. $u_w$) getrennt ermittelt werden, **dadurch gekennzeichnet,** daß wenn Änderungen pro Zeiteinheit des von dem Gleichfeld ($\phi_1$) herrührenden Anteils ($u_g$) ein vorgegebenes Maß überschreiten, das Signal (S) aus dem von dem Wechselfeld ($\phi_2$) herrührenden Anteil ($u_w$), andernfalls aus dem von dem Gleichfeld ($\phi_1$) herrührenden Anteil ($u_g$) abgeleitet wird.

2. Verfahren zur Erzeugung eines Signals (S), das der Stromstärke eines fließenden, elektrisch leitenden Mediums entspricht, mittels eines das Medium durchsetzenden Magnetfels ($\phi$), Erfassung von Potentialen in dem Medium mittels zwei Elektroden (5) an zwei Stellen, zwischen denen infolge des Fließens des Mediums eine Potentialdifferenz besteht, und Ableitung des Signals (S) aus einer Spannung ($U_f$ = $U_p$ + $u_g$ oder $U_f$ = $U_p$ + $u_w$), die dieser Potentialdifferenz entspricht, bei dem das Magnetfeld ($\phi$) ein sich mit verhältnismäßig langer Periode ($T_g$) periodisch änderndes Gleichfeld ($\phi_1$) ist, das sich mit einem Wechselfeld ($\phi_2$) verhältnismäßig kurzer Periode ($T_w$) periodisch abwechselt, und bei dem aus der Spannung ($U_f$ = $U_p$ + $u_g$ oder $U_f$ = $U_p$ + $u_w$) die von dem Gleichfeld ($\phi_1$) bzw. die von dem Wechselfeld ($\phi_2$) herrührenden Anteile ($u_g$ bzs. $u_w$) getrennt ermittelt werden, **dadurch gekennzeichnet,** daß wenn Änderungen pro Zeiteinheit des von dem Gleichfeld ($\phi_1$) herrührenden Anteils ($u_g$) ein vorgegebenes Maß überschreiten, das Signal (S) aus dem von dem Wechselfeld ($\phi_2$) herrührenden Anteil ($u_w$), andernfalls aus dem von dem Gleichfeld ($\phi_1$) herrührenden Anteil ($u_g$) abgeleitet wird.

3. Verfahren nach Anspruch 1 und 2, dadurch gekennzeichnet, daß in Abhängigkeit von Änderungen pro Zeiteinheit der Anteile ($u_g$ bzw. $u_w$) entweder das Verfahren nach Anspruch 1 oder das Verfahren nach Anspruch 2 durchgeführt wird.

4. Verfahren nach einem der vorhergehenden Ansprüche, **dadurch gekennzeichnet,** daß das Gleichfeld monopolar ist.

5. Verfahren nach einem der Ansprüche 1 bis 3, **dadurch gekennzeichnet,** daß das Gleichfeld bipolar ist.

6. Verfahren nach einem der vorhergehenden Ansprüche, **dadurch gekennzeichnet,** daß aus Nullzuständen der von dem Gleichfeld ($\phi_1$) herrührenden Anteile ($u_g$) Signale zur Korrektur des Nullpunkts der von dem Wechselfeld ($\phi_2$) herrührenden Anteile ($u_w$) abgeleitet werden.

7. Verfahren nach einem der vorhergehenden Ansprüche, **dadurch gekennzeichnet,** daß der dem Gleichfeld ($\phi_1$) entsprechende Anteil ($u_g$) aus zeitlichen Abschnitten ($t_{g1}$, $t_{g2}$) des Gleichfelds ($\phi_1$) ermittelt wird, die nächst den Enden der Halbperioden ($T_{g/2}$) des Gleichfelds ($\phi_1$) liegen.

8. Verfahren nach Anspruch 1 oder einem der Ansprüche 3 bis 7, **dadurch gekennzeichnet,** daß der dem Wechselfeld ($\phi_2$) entsprechende Anteil ($u_w$) aus zeitlichen Abschnitten ($tw_1$, $tw_2$; $tw_3$, $tw_4$) des Wechselfelds ($\phi_2$) ermittelt wird, die innerhalb jeder Halbperiode ($T_{g/2}$) des Gleichfelds ($\phi_1$) liegen.

9. Verfahren nach einem der Ansprüche 7 und 8, **dadurch gekennzeichnet,** daß die zeitlichen Abschnitte ($t_{g1}$, $t_{g2}$) des Gleichfelds ($\phi_1$) mit den zeitlichen Abschnitten ($tw_1$, $tw_2$; $tw_3$, $tw_4$) des Wechselfelds ($\phi_2$) koinzidieren.

10. Verfahren nach einem der Ansprüche 7 bis 9, **dadurch gekennzeichnet,** daß der dem Gleichfeld ($\phi_1$) entsprechende Anteil ($u_G$) aus zeitlichen Abschnitten ($tg_1$, $tg_2$) des Gleichfeldes ($\phi_1$) ermittelt wird, die gleich einer ganzen Anzahl von Perioden ($T_w$) des Wechselfelds ($\phi_2$) sind.

**Claims**

1. A process for generating a signal (S), which corresponds to the current strength of a flowing electrically conductive medium, by means of a magnetic field ($\phi$) penetrating the medium, detecting potentials in the medium by means of two electrodes (5) at two points, between which there is a potential difference as a result of the flow of the medium, and deriving the signal (S) from a voltage ($U_f$ = $U_p$ + $u_w$ +

$u_g$), which corresponds to said potential difference, in which process the magnetic field ($\phi$) is a constant field ($\phi_1$) changing periodically with a comparatively long period ($T_g$), an alternating field ($\phi_2$) with a comparatively short period ($T_w$) being superimposed on said constant field, and in which process the portions ($u_g$ to $u_w$) derived from the constant field ($\phi_1$) and from the alternating field ($\phi_2$) are separately evaluated from the voltage ($U_f = U_p + u_w + u_g$), characterised in that, in the event of changes per time unit in the portion ($U_g$) derived from the constant field ($\phi_1$) exceeding a predetermined amount, the signal (S) is derived from the portion ($U_w$) originating from the alternating field ($\phi_2$), or else from the portion ($U_g$) originating from the constant field ($\phi_1$).

2. A process for generating a signal (S) which corresponds to the current of a flowing electrically conductive medium, by means of a magnetic field ($\phi$) penetrating the medium, detecting potentials in the medium by means of two electrodes (5) at two points, between which there is a potential difference as a result of the flow of the medium, and deriving the signal (S) from a voltage ($U_f = U_p + u_g$ or $U_f = U_p + u_w$), which corresponds to said potential difference, in which process the magnetic field ($\phi$) is a constant field ($\phi_1$) changing periodically with a comparatively long cycle ($T_g$), and in which process the portions ($u_g$) or ($u_w$), derived from the constant field ($\phi_1$) and from the alternating field ($\phi_2$) are separately evaluated from the voltage ($U_f = U_p + u_g$ or $U_f = U_p + u_w$), characterised in that, in the event of changes per time unit in the portion ($u_g$) originating from the constant field ($\phi_1$) exceeding a predetermined amount, the signal (S) is derived from the portion ($u_w$) originating from the alternating field ($\phi_2$), or else from the portion ($u_g$) originating from the constant field ($\phi_1$).

3. A process according to claim 1 and 2, characterised in that depending on the changes per time unit in the portions ($u_g$ or $u_w$), either the process according to claim 1 or the process according to claim 2 is carried out.

4. A process according to one of the preceding claims, characterised in that the constant field is monopolar.

5. A process according to one of claims 1 to 3, characterised in that the constant field is bipolar.

6. A process according to one of the preceding claims, characterised in that signals for correcting the zero point of the portions ($u_w$) originating from the alternating field ($\phi_2$) are derived from zero states of the portions ($u_g$) originating from the constant field ($\phi_1$).

7. A process according to one of the preceding claims, characterised in that the portion ($u_g$) which corresponds to the alternating field ($\phi_1$) is evaluated from time sections ($t_{g1}$, $t_{g2}$) of the constant field ($\phi_1$) positioned next to the ends of the half-periods ($T_{g/2}$) of the constant field ($\phi_1$).

8. A process according to claim 1 or one of claims 3 to 7, characterised in that the portion ($u_w$) corresponding to the alternating field ($\phi_2$) is evaluated from time sections ($tw_1$, $tw_2$; $tw_3$, $tw_4$) of the alternating field ($\phi_2$), positioned within each half-period ($T_{g/2}$) of the constant field ($\phi_1$).

9. A process according to one of claim 7 and 8, characterised in that the time sections ($t_{g1}$, $t_{g2}$) of the constant field ($\phi_1$) coincide with the time sections ($tw_1$, $tw_2$; $tw_3$, $tw_4$) of the alternating field ($\phi_2$).

10. A process according to one of claim 7 to 9, characterised in that the portion ($u_G$) corresponding to the constant field ($\phi_1$) is evaluated from time sections ($t_{g1}$, $t_{g2}$) of the constant field ($\phi_1$), which are equal to a whole number of periods ($T_w$) of the alternating field ($\phi_2$).

**Revendications**

1. Procédé pour la production d'un signal (S) qui correspond à l'intensité ou débit d'un fluide électroconducteur, au moyen d'un champ magnétique ($\phi$) traversant le fluide, saisie de potentiels dans le fluide au moyen de deux électrodes (5) en deux emplacements, entre lesquelles par suite de l'écoulement du fluide existe une différence de potentiels, et dérivation du signal (S) à partir d'une tension ($U_f = U_p + u_w + u_g$), qui correspond à cette différence de potentiels, procédé dans lequel le champ magnétique ($\phi$) est un champ continu ($\phi1$) se modifiant périodiquement avec une période relativement longue ($T_g$), auquel est superpose un champ alternatif ($\phi2$) de période relativement courte ($T_w$), et dans lequel on calcule à partir de la tension ($U_f = U_p + u_w + u_g$), les portions ($u_g$ ou $u_w$) provenant du champ continu ($\phi1$) et du champ alternatif ($\phi2$) de façon séparée, procédé caractérisé en ce que lorsque des modifications par unité de temps de la portion ($u_g$) provenant du champ alternatif ($\phi 1$) dépassent une mesure prédéterminée, le signal (S) est dérivé à partir de la portion ($u_w$) provenant du champ alternatif ($\phi 2$), sinon à partir de la portion provenant du champ continu ($\phi 1$).

2. Procédé pour la production d'un signal (S) qui correspond au débit ou intensité d'un fluide conducteur électriquement, au moyen d'un champ magnétique ($\phi$) traversant le fluide, saisie des potentiels dans le fluide au moyen de deux électrodes (5) en deux endroits, entre lesquelles par suite de l'écoulement du fluide, existe une différence de potentiels, et dérivation du signal (S) à partir d'une tension ($U_f = U_p + u_g$ ou $U_f = U_p + u_w$), qui correspond à cette différence de potentiels, dans lequel le champ magnétique ($\phi$) est un champ continu ($\phi 1$) changeant périodiquement avec une période relativement longue ($T_g$), champ qui alterne avec un champ alternatif ($\phi 2$) relativement de courte période ($T_w$) périodiquement, et dans lequel à partir de la tension ($U_f = U_p + u_g$ ou $U_f = U_p + u_w$), on calcule séparément les portions ($u_g$ ou $u_w$) provenant du champ continu ($\phi 1$) ou du champ alternatif ($\phi 2$), caractérisé en ce que lorsque des modifications par unité de temps de la portion ($u_g$) provenant du champ continu ($\phi 1$) dépassent une mesure prédéterminée, on dérive le signal (S) à partir de la portion ($u_w$) provenant du champ alternatif ($\phi 2$), ou sinon à partir de la portion ($u_g$) provenant du champ continu ($\phi 1$).

3. Procédé selon la revendication 1 ou 2, caractérisé en ce qu'en fonction des modifications par unité de temps des portions ($u_g$ ou $u_w$) on effectue soit le procédé selon la revendication 1, soit le procédé selon la revendication 2.

4. Procédé selon l'une des revendications précédentes, caractérisé en ce que le champ continu est monopolaire.

5. Procédé selon l'une des revendications 1 à 3, caractérisé en ce que le champ continu est bipolaire.

6. Procédé selon l'une des revendications précédentes, caractérisé en ce que l'on dérive à partir des états zéro des portions ($u_g$) provenant du champ continu ($\phi 1$) des signaux pour la correction du point zéro des portions ($u_w$) provenant du champ alternatif ($\phi 2$).

7. Procédé selon l'une des revendications précédentes, caractérisé en ce que l'on calcule la portion ($u_g$) correspondant au champ continu ($\phi 1$) à partir de sections temporelles ($t_{g1}$, $t_{g2}$) du champ continu ($\phi 1$), qui se situent à proximité des extrémités des semi-périodes ($T_{g/2}$) du champ continu ($\phi 1$).

8. Procédé selon la revendication 1 ou selon l'une des revendications 3 à 7, caractérisé en ce que l'on calcule la portion ($u_w$) correspondant au champ alternatif ($\phi 2$) à partir de sections temporelles ($t_{w1}$, $t_{w2}$ ; $t_{w3}$, $t_{w4}$) du champ alternatif ($\phi 2$), qui se situent à l'intérieur de chaque semi-période ($T_{g/2}$) du champ continu ($\phi 1$).

9. Procédé selon l'une des revendications 7 et 8, caractérisé en ce que les sections temporelles ($t_{g1}$, $t_{g2}$) du champ continu ($\phi 1$) coïncident avec les sections temporelles ($t_{w1}$, $t_{w2}$ ; $t_{w3}$, $t_{w4}$) du champ alternatif ($\phi 2$).

10. Procédé selon l'une des revendications 7 à 9, caractérisé en ce que l'on calcule la portion ($u_g$) correspondant au champ continu ($\phi 1$) à partir de sections temporelles ($t_{g1}$, $t_{g2}$) du champ continu ($\phi 1$), qui sont identiques à un nombre entier de périodes ($T_w$) du champ alternatif ($\phi 2$).

FIG.1

FIG.2

FIG.3